## Europäisches Patentamt

## European Patent Office

## Office européen des brevets

(19)

(11) Veröffentlichungsnummer : **0 010 662**
**B1**

(12)

# EUROPÄISCHE PATENTSCHRIFT

(45) Veröffentlichungstag der Patentschrift :
26.01.83

(51) Int. Cl.³ : **H 04 J   3/07**

(21) Anmeldenummer : **79103915.9**

(22) Anmeldetag : **11.10.79**

(54) **Multiplexgerät.**

(30) Priorität : **27.10.78 DE 2846960**

(43) Veröffentlichungstag der Anmeldung :
**14.05.80 Patentblatt 80/10**

(45) Bekanntmachung des Hinweises auf die Patenterteilung : **26.01.83 Patentblatt 83/04**

(84) Benannte Vertragsstaaten :
**AT BE CH FR GB IT LU NL SE**

(56) Entgegenhaltungen :
**FR A 374 789**

**CABLES ET TRANSMISSION, Band 32, Nr. 2, April 1978, Paris, FR, PORTEJOIE et al. : « Equipement de multiplexage numérique TNM 1-2 de deuxième génération et équipements de surveillance associés », Seiten 222-245.**
**CABLES ET TRANSMISSION, Band 32, Nr. 2, April 1978, Paris, FR, PORTEJOIE et al. : « Equipement de multiplexage numérique TNM 2-4 et équipements de surveillance associés », Seiten 246-277.**

(73) Patentinhaber : **SIEMENS AKTIENGESELLSCHAFT Berlin und München Wittelsbacherplatz 2 D-8000 München 2 (DE)**

(72) Erfinder : **Müller, Horst, Dipl.-Ing. Dammstrasse 11 D-8021 Hohenschäftlarn (DE)**

## Multiplexgerät

Die Erfindung bezieht sich auf ein Multiplexgerät für nach dem Positiv- bzw. Negativ-Stopfverfahren zu einem Zeitmultiplexsignal zu verschachtelnde plesiochrone und im Falle durchgeschalteter Kanäle in einer Abzweigstelle bereits angepaßte Digitalsignale, mit Anpassungsanordnungen, die positive bzw. negative Stopfimpulse in jedes pleiochrone Digitalsignal einfügen und das angepaßte Digitalsignal sowie eine Stopfinformation abgeben, mit Entstopfungsanordnungen — im Falle durchgeschalteter Kanäle in einer Abzweigstelle — die das angepaßte Digitalsignal sowie die Stopfinformation abgeben, mit einem Multiplexer, der die angepaßten Digitalsignale und die in einen Überrahmen einzufügenden Stopfinformationen zu dem Zeitmultiplexsignal verschachtelt, mit Überwachungsanordnungen, die den Ausfall eines oder mehrerer Digitalsignale melden, mit einer Anordnung zur Erzeugung einer synthetischen Stopfinformation, die empfangsseitig ein im Toleranzbereich der Taktfrequenz der Digitalsignale liegendes ausgangsseitiges AIS-Signal (Dauer-Eins-Signal) auslöst, und mit einer Anordnung zur Erzeugung eines eingangsseitigen AIS-Signals.

Bei digitalen Übertragungssystemen gibt jedes Gerät entweder bei Ausfall eines oder mehrerer Eingangssignale oder bei einem Fehler im eigenen Bereich Alarm ab und sendet in die vom Ausfall oder vom Fehler betroffenen Kanäle des nachfolgenden Streckenabschnittes ein AIS-Signal (Alarm Indication Signal) aus. Dieses ist ein Dauer-Eins-Signal, das in nachfolgenden Überwachungsabschnitten erkannt wird und verhindert, daß diese einen Alarm abgeben. Die Taktfrequenz des AIS-Signals soll innerhalb der für die plesiochronen Digitalsignale geltenden Toleranzgrenzen liegen.

Bei der Umsetzung von vier 2,048-Mbit/s-Signalen in ein 8,448-Mbit/s-Signal beträgt die geforderte Frequenztoleranz beispielsweise 2,048 $(1 \pm 5 \times 10^{-5})$ Mbit/s. Bei einem Ausfall eines ankommenden 2,048-Mbit/s-Signals soll in den Bitpositionen des gestörten Untersystems im 8,448-Mbit/s-Bitstrom das AIS-Signal mit nomineller Bitfolgefrequenz eingesetzt werden. Die Stopfinformationsbits müssen demzufolge so gesetzt werden, daß beim empfangsseitigen Entstopfen die Taktfrequenz des AIS-Signals innerhalb der geforderten Frequenztoleranz liegt. Eine solche Anordnung ist in « CABLES ET TRANSMISSION », Band 32, Nr. 2, April 1978, S. 222-245 (PORTEJOIE et al. : « Equipement de multiplexage numérique TNM 1-2 de deuxième génération et équipements de surveillance associés ») beschrieben.

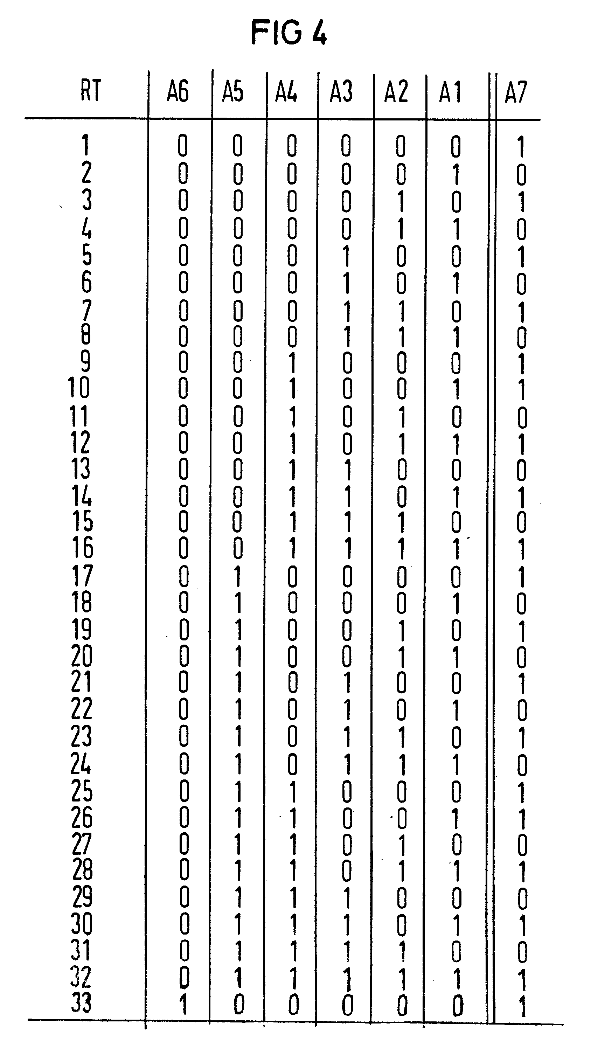

Bei dem in der Druckschrift « The Post Office Electrical Engineers' Journal », Juli 1976, Seiten 93 bis 102, insbesondere Fig. 3 und 4 beschriebenen Gerät ist ein Hilfsoszillator vorgesehen, der das AIS-Signal mit der zulässigen Taktfrequenz erzeugt und eingangsseitig in den Multiplexer einspeist. Soweit Anpassungseinrichtungen vorhanden sind, ist gegen ein solches verfahren nichts einzuwenden. Es gibt jedoch spezielle Einsatzfälle, beispielsweise Abzweigstellen, bei denen die Anpassungsanordnungen entfallen können und eigens für die AIS-Signalanpassung vorgesehen werden müßten.

Aufgabe der Erfindung ist es, ein Multiplexgerät zu realisieren, bei dem die AIS-Signaleinspeisung ohne Anpassungsanordnung erfolgen kann.

Ausgehend von einem Multiplexgerät der einleitend geschilderten Art wird diese Aufgabe erfindungsgemäß dadurch gelöst, daß eine Umschaltanordnung vorgesehen ist, die von den Überwachungsanordnungen gesteuert wird und bei Ausfall wenigstens eines Digitalsignals in dem wenigstens einen betroffenen Kanal einerseits die synthetische Stopfinformation und andererseits das eingangsseitige AIS-Signal unmittelbar in den Multiplexer einspeist.

Ein geringer Jitter ergibt sich, wenn die Anordnung zur Erzeugung einer synthetischen Stopfinformation derart dimensioniert ist, daß die synthetische Stopfinformation im Überrahmen eine gleichmäßige Verteilung der Zustände « 1 » aufweist.

Die Zusammenhänge zwischen der Frequenz von Untersystem und Obersystem sowie den Rahmenparametern lassen sich durch folgende allgemeine mathematische Beziehung angeben (in Klammern ist jeweils ein Zahlenbeispiel angegeben) : Die relative Füllfrequenz beträgt :

$$\delta = \frac{n}{m} - \frac{f_u}{f_o} \cdot N$$

$f_o$ Bitfolgefrequenz des Obersystems $(8{,}448 \pm 3 \cdot 10^{-5}$ kHz) ;

$f_u$ Bitfolgefrequenz des Untersystems $(2{,}048 \pm 5 \cdot 10^{-5}$ kHz) ;

$\delta$ rel. Füllfrequenz = Frequenz der Füllstellen/Frequenz der max. möglichen Füllstellen ;

n Anzahl der in einem Rahmen enthaltenen Informationsbits einschließlich Füllbit (n = 824) ;

N Anzahl der Bit pro Rahmen (N = 848) ;

m Anzahl der verschachtelten Systeme (m = 4).

Bei nominellen Bitfolgefrequenzen des Obersystems (8,448 MHz und des Untersystems 2,048 MHz) ist die nominale relative Füllfrequenz $\delta_{Nom} = 14/33$, d.h. innerhalb von dreiunddreißig Grundrahmen muß vierzehnmal gestopft werden.

Vorteilhaft ist zur Erzeugung einer synthetischen Stopfinformation ein rücksetzbarer Zähler mit einer Kette von sechs Flipflops, bei denen dem Takteingang des ersten Flipflops der Grundrahmentakt zugeführt wird und bei denen der nichtinvertierende Ausgang jedes vorangegangenen Flipflops mit dem Takteingang des jeweils nachfolgenden Flipflops verbunden ist, mit einem ersten NAND-Gatter, dessen erster Eingang mit dem nichtinvertierenden Ausgang des sechsten Flipflops, dessen zweiter Eingang mit dem nichtinvertierenden Ausgang des ersten Flipflops und dessen Ausgang mit den Rücksetzeingängen aller sechs Flipflops verbunden sind, mit einem zweiten NAND-Gatter, dessen erster Eingang mit dem invertierenden Ausgang des zweiten Flipflops und dessen zweiter Eingang mit dem invertierenden Ausgang des dritten Flipflops verbunden sind, mit einem ersten UND-Gatter, dessen erster Eingang mit dem Ausgang des zweiten NAND-Gatters, dessen zweiter Eingang mit dem nichtinvertierenden Ausgang des vierten Flipflops und dessen dritter Eingang mit dem invertierenden Ausgang des ersten Flipflops verbunden sind, mit einem zweiten UND-Gatter, dessen erster Eingang mit dem nichtinvertierenden Ausgang des ersten Flipflops und dessen zweiter Eingang mit dem invertierenden Ausgang des vierten Flipflops verbunden sind, und mit einem NOR-Gatter, dessen erster Eingang mit dem Ausgang des ersten UND-Gatters, dessen zweiter Eingang mit dem Ausgang des zweiten UND-Gatters und dessen Ausgang mit dem Gesamtausgang verbunden sind.

Wenn die Frequenzabweichung des Obersystems geringer als die zulässige Frequenzabweichung des Untersystems ist, ist es möglich, die Stopfinformationsbits nicht mit der nominalen relativen Füllfrequenz, sondern mit einer geringfügig davon abweichenden relativen Füllfrequenz einzusetzen, die sich schaltungstechnisch einfacher realisieren läßt.

Anhand von Ausführungsbeispielen wird die Erfindung nachstehend näher erläutert.

Figur 1  zeigt einen Pulsrahmen für das Stopfverfahren,

Figur 2  zeigt ein erfindungsgemäßes Multiplexgerät,

Figur 3  zeigt eine Anordnung zur Erzeugung einer synthetischen Stopfinformation,

Figur 4  zeigt eine Tabelle zur Anordnung nach Fig. 3 und

Figur 5  zeigt eine Abzweigstelle.

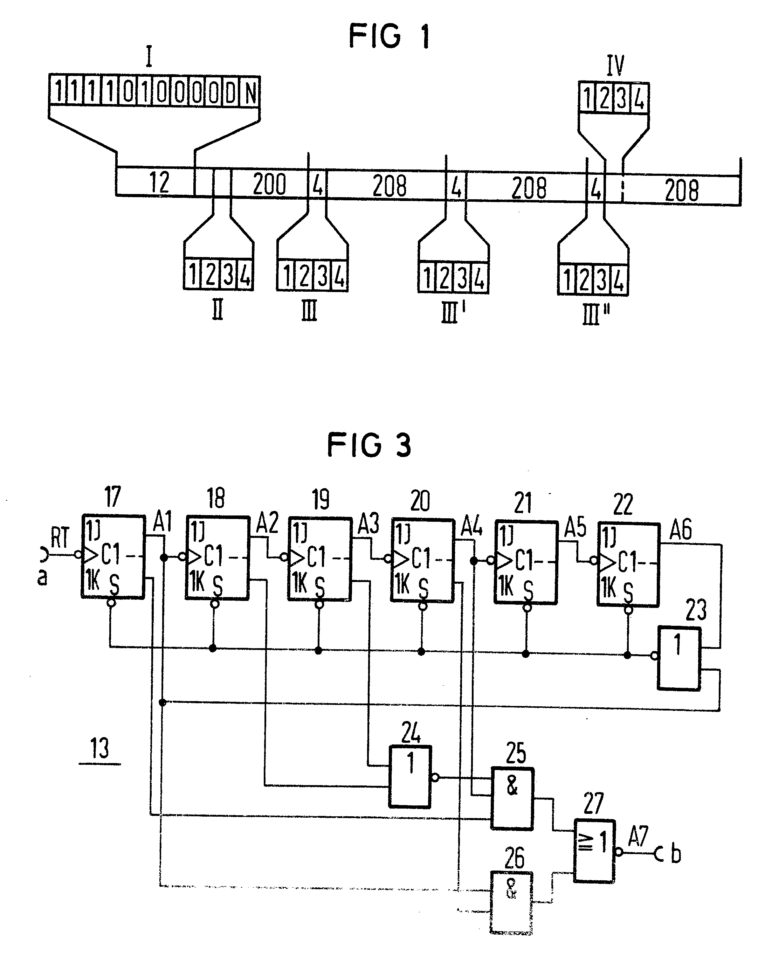

Figur 1 zeigt einen Pulsrahmen für das Positiv-Stopfverfahren nach der CCITT-Empfehlung G. 742, bei dem vier 2,048-Mbit/s-Signale in ein 8,448-Mbit/s-Signal umgesetzt werden. Letzteres ist in Grundrahmen zu je 848 Bit gegliedert. Im Block I bilden die ersten zehn Bit das Rahmenkennungswort, das Bit D ein Meldebit für dringenden Alarm und das Bit N ein Meldebit für nicht dringenden Alarm. Der Block II zeigt Informationsbits der vier 2,048-Mbit/s-Signale. Die Blocks III, III' und III'' enthalten Teile der Stopfinformation für die vier 2,048-Mbit/s-Signale. Dreiunddreißig dieser Blöcke bilden einen Überrahmen für die Stopfinformation. Die Bits des Blocks IV können zu Stopfbits erklärt werden, wenn sie nicht für die Übertragung von Informationen der 2,048-Mbit/s-Signale benötigt werden.

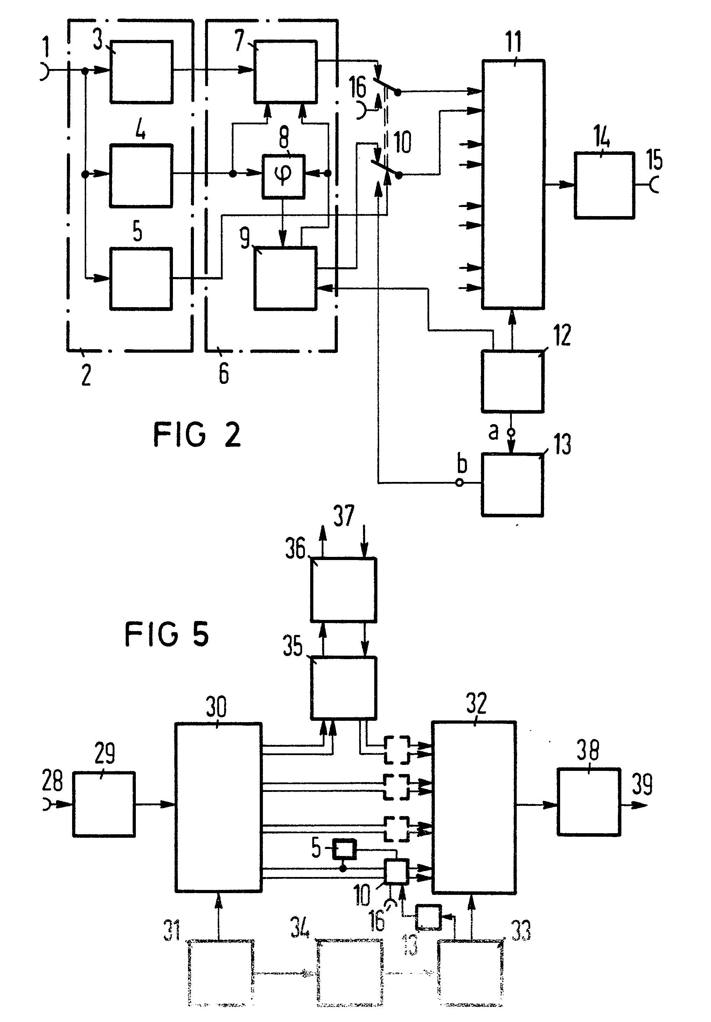

Figur 2 zeigt ein erfindungsgemäßes Multiplexgerät für das Positiv-Stopfverfahren, bei dem empfangsseitig der Übersichtlichkeit halber nur eine Kanalanordnung eingezeichnet ist. Die Anordnung enthält einen Eingang 1 für ein 2,048-Mbit/s-Signal, eine 2,048-Mbit/s-Schnittstelle 2 mit einem HDB3-Decodierer 3, mit einem Taktregenerator 4 und mit einer Überwachungsanordnung 5, eine Anpassungsanordnung 6 mit einem elastischen Speicher 7, mit einem Phasendiskriminator 8 und mit einer Stopfanordnung 9, eine Umschaltanordnung 10, einen Multiplexer 11, eine Taktzentrale 12, eine Anordnung 13 zur Erzeugung einer synthetischen Stopfinformation, eine 8,448-Mbit/s-Schnittstelle 14 und einen Ausgang 15 für das 8,448-Mbit/s-Signal.

Das im HDB3-Code am Eingang 1 anliegende 2,048-Mbit/s-Signal wird im HDB3-Decodierer 3 decodiert und dem elastischen Speicher 7 zugeführt. Im Taktregenerator 4 wird der Takt des am Eingang 1 anliegenden Signals zurückgewonnen und als Einschreibtakt dem elastischen Speicher 7 zugeführt. Die Stopfeinrichtung 9 erzeugt einen Auslesetakt für den elastischen Speicher 7 ; der Phasendiskriminator 8 vergleicht den Einschreib- und den Auslesetakt und steuert die Stopfeinrichtung 9. Über die Umschaltanordnung 10 wird einerseits das vom elastischen Speicher 7 abgegebene angepaßte Digitalsignal als auch die von der Stopfeinrichtung 9 abgegebene Stopfinformation dem Multiplexer 11 zugeführt, der sie vom Takt der Zentrale 12 gesteuert mit den angepaßten Digitalsignalen und den Stopfinformationen der weiteren Kanäle zu einem Zeitmultiplexsignal zusammenfaßt, das über die 8,448-Mbit/s-Schnittstelle 14 und den Ausgang 15 abgegeben wird.

Stellt die Überwachungsanordnung 5 einen Ausfall des am Eingang 1 anliegenden Signals fest, so steuert sie die Umschaltanordnung 10 um. Daraufhin wird dem Multiplexer 11 anstelle des angepaßten Digitalsignals über die Klemme 16 ein AIS-Signal in Form eines Dauer-Eins-Signals zugeführt. Weiter erhält der Multiplexer 11 anstelle der Stopfinformation aus der Stopfeinrichtung 9 eine synthetische Stopfinformation aus der Anordnung 13. Dies hat zur Folge, daß das AIS-Signal ohne Stopfimpulse zur Empfangsseite übertragen wird. Infolge der synthetischen Stopfinformation werden dort jedoch Impulse eliminiert. Bei geeigneter Wahl des Musters der synthetischen Stopfinformation entsteht auf der Empfangsseite ein AIS-Signal der gewünschten Taktfrequenz.

Figur 3 zeigt eine Anordnung 13 zur Erzeugung einer synthetischen Stopfinformation. Die Anordnung enthält JK-Flipflops 17 bis 22, NAND-Gatter 23 und 24, UND-Gatter 25 und 26 und ein NOR-Gatter 27. Die Anordnung kann mit dem Eingang a und dem Ausgang b und den entsprechenden Stellen in der Fig. 2 eingesetzt werden.

Die Wirkungsweise der Anordnung 13 zur Erzeugung einer synthetischen Stopfinformation ist der Tabelle nach Fig. 4 zu entnehmen. Den dreiunddreißig Rahmentakten RT eines Überrahmens sind die jeweiligen Zustände der Flipflops 17 bis 22 und des Ausgangs b, bezeichnet mit A1 bis A7, zugeordnet. Der Spalte für A7 ist zu entnehmen, daß die Verteilung der Zustände « 1 » und « 0 » einigermaßen gleichmäßig ist.

Figur 5 zeigt eine Abzweigstelle mit einem Eingang 28, mit einer 8,448-Mbit/s-Schnittstelle 29, mit einem Demultiplexer 30, mit einer Demultiplexer-Taktversorgung 31, mit einem Multiplexer 32, mit einer Multiplexer-Taktversorgung 33, mit einer Synchronisierung 34, mit einer 2,048-Mbit/s-Anpassungsanordnung 35, mit einer 2,048-Mbit/s-Schnittstelle 36, mit einem Anschluß 37, mit einer 8,448-Mbit/s-Schnittstelle 38 und mit einem Ausgang 39.

Ein an den Eingang 28 angelegtes 8,448-Mbit/s-Signal wird im Demultiplexer 30 in vier angepaßte Digitalsignale mit jeweils zugehöriger Stopfinformation aufgeteilt. Drei dieser angepaßten Digitalsignale mit Stopfinformationen sind zum Multiplexer 32 durchgeschaltet, der infolge des Einflusses der Synchronisieranordnung 34 mit dem Demultiplexer 30 synchron arbeitet. Das vierte angepaßte Digitalsignal mit seiner Stopfinformation wird der 2,048-Mbit/s-Anpassungsanordnung 35 zugeführt, die das ursprünglich plesiochrone Digitalsignal wieder herstellt und über die 2,048-Mbit/s-Schnittstelle 36 dem Anschluß 37 zugeführt. Ein diesem Anschluß von außen zugeführtes plesiochrones Digitalsignal wird über die 2,048-Mbit/s-Schnittstelle 36 der 2,048-Mbit/s-Anpassungsanordnung 35 zugeführt die das plesiochrone Digitalsignal in ein angepaßtes Digitalsignal und eine Stopfinformation umwandelt, die an den Multiplexer 32 weitergegeben werden. Dieser bildet aus den vier angepaßten Digitalsignalen mit ihren zugehörigen Stopfinformationen ein 8,448-Mbit/s-Zeitmultiplexsignal, das über die 8,448-Mbit/s-Schnittstelle 38 dem Ausgang 39 zugeführt wird.

Erfindungsgemäß ist jedem Eingang des Multiplexers 32 eine Umschaltanordnung 10 vorgeschaltet, die durch eine Überwachungsanordnung 5 gesteuert, ein AIS-Signal über die Klemme 16 und eine synthetische Stopfinformation aus der Anordnung 13 in den Multiplexer 32 einspeist, wie dies bereits anhand der Fig. 2 ausführlich beschrieben wurde. In Fig. 5 ist dieser Teil der Anordnung nur einmal vollständig eingezeichnet während er für die anderen Digitalsignale nur durch ein gestrichelt gezeichnetes Kästchen angedeutet ist.

## Ansprüche

1. Multiplexgerät für nach dem Positiv- bzw. Negativ-Stopfverfahren zu einem Zeitmultiplexsignal zu verschachtelnde plesiochrone und im Falle durchgeschalteter Kanäle in einer Abzweigstelle bereits angepaßte Digitalsignale, mit Anpassungsanordnungen (6), die positive bzw. negative Stopfimpulse in jedes plesiochrone Digitalsignal einfügen und das angepaßte Digitalsignal sowie eine Stopfinformation abgeben, mit Entstopfungsanordnungen — im Falle durchgeschalteter Kanäle in einer Abzweigstelle — die das angepaßte Digitalsignal sowie die Stopfinformation abgeben, mit einem Multiplexer (11), der die angepaßten Digitalsignale und die in einen Überrahmen einzufügenden Stopfinformationen zu dem Zeitmultiplexsignal verschachtelt, mit Überwachungsanordnungen (5), die den Ausfall eines oder mehrerer Digitalsignale melden, mit einer Anordnung (13) zur Erzeugung einer synthetischen Stopfinformation, die empfangsseitig ein im Toleranzbereich der Taktfrequenz der Digitalsignale liegendes ausgangsseitiges AIS-Signal (Dauer-Eins-Signal) auslöst, und mit einer Anordnung (16) zur Erzeugung eines eingangsseitigen AIS-Signals, dadurch gekennzeichnet, daß eine Umschaltanordnung (10) vorgesehen ist, die von den Überwachungsanordnungen (5) gesteuert wird und bei Ausfall wenigstens eines Digitalsignals in dem wenigstens einen betroffenen Kanal einerseits die synthetische Stopfinformation und andererseits das eingangsseitige AIS-Signal unmittelbar in den Multiplexer (11) einspeist.

2. Multiplexgerät nach Anspruch 1, dadurch gekennzeichnet, daß die Anordnung (13) zur Erzeugung einer synthetischen Stopfinformation derart dimensioniert ist, daß die synthetische Stopfinformation im Überrahmen eine gleichmäßige Verteilung der Zustände « 1 » aufweist.

3. Multiplexgerät nach Anspruch 1 oder 2, mit einem aus dreiunddreißig Grundrahmen bestehenden Überrahmen für die Stopfinformation, dadurch gekennzeichnet, daß als Anordnung (13) zur Erzeugung einer synthetischen Stopfinformation ein rücksetzbarer Zähler vorgesehen ist, mit einer Kette von sechs Flipflops (17 bis 22), bei denen dem Takteingang des ersten Flipflops (17) der Grundrahmentakt zugeführt wird und bei denen der nichtinvertierende Ausgang jedes vorangegangenen Flipflops mit dem Takteingang des jeweils nachfolgenden Flipflops verbunden ist, mit einem ersten NAND-Gatter (23), dessen erster Eingang mit dem nichtinvertierenden Ausgang des sechsten Flipflops (22), dessen zweiter Eingang mit dem nichtinvertierenden Ausgang des ersten Flipflops (17) und dessen Ausgang mit den Rücksetzeingängen aller sechs Flipflops (17 bis 22) verbunden sind, mit einem zweiten NAND-Gatter (24), dessen erster Eingang mit dem invertierenden Ausgang des zweiten Flipflops (18) und dessen zweiter Eingang mit dem invertierenden Ausgang des dritten Flipflops (19) verbunden sind, mit einem ersten UND-Gatter (25), dessen erster Eingang mit dem Ausgang des zweiten NAND-Gatter (24) dessen zweiter Eingang mit dem nichtinvertierenden Ausgang des vierten Flipflops (20) und dessen dritter Eingang mit dem invertierenden Ausgang des ersten Flipflops (17) verbunden sind, mit einem zweiten UND-Gatter (26), dessen erster Eingang mit dem nichtinvertierenden Ausgang des ersten Flipflops (17) und dessen zweiter Eingang mit dem invertierenden Ausgang des vierten Flipflops (20) verbunden sind, und mit einem NOR-Gatter (27), dessen erster Eingang mit dem Ausgang des ersten UND-Gatters (25), dessen zweiter Eingang mit dem Ausgang des zweiten UND-Gatters (26) und dessen Ausgang mit dem Ausgang der Anordnung (b) verbunden sind.

Claims

1. Multiplexing device for plesiochronous digital signals which are to be internested in accordance with a positivenegative stuffing operation to form a t.d.m. signal and which are already matched in the event that channels are switched through in a branching station, comprising matching arrangements (6) which interpose positive or negative stuffing pulses into each plesiochronous digital signal and which emit the matched digital signal and likewise an item of stuffing information, comprising de-stuffing arrangements — in the event of switched through channels in a branching station — which emit the matched digital signal and the item of stuffing information, comprising a multiplexer (11) which internests the matched digital signals and the items of stuffing information which are to be interposed into a super-frame, so as to form a t.d.m. signal ; comprising monitoring arrangements (5) which report the failure of one or more of the digital signals, comprising an arrangement (13) which serves to generate an item of synthetic stuffing information which at the receiving end triggers an output-end AIS (alarm indication signal) signal (continuous one signal) which lies within the tolerance range of the clock frequency of the digital signals and comprising an arrangement (16) which serves to generate an input-end AIS signal, characterised in that a switching arrangement (10) is provided which is controlled by the monitoring arrangements (5) and in the event of the failure of at least one digital signal in the minimum of one affected channel feeds on the one hand the synthetic stuffing information and on the other hand the input-end AIS signal directly into the multiplexer (11).

2. Multiplexing device as claimed in claim 1, characterised in that the arrangement (13) which serves to generate an item of synthetic stuffing information is dimensioned in such manner that in the super-frame the item of synthetic stuffing information exhibits a uniform distribution of the « 1 » state.

3. Multiplexing device as claimed in claim 1 or 2, comprising a super-frame for the stuffing information comprising thirty-three basic frames, characterised in that the arrangement (13) which serves to generate an item of synthetic stuffing information comprises a counter having reset facilities, comprising a chain of six flip-flops (17 to 22) where the clock pulse input of the first flip-flop (17) is supplied with the basic frame clock pulse train and where the non-inverting output of each preceding flip-flop is connected to the clock pulse input of the respective following flip-flop, comprising a first NAND-gate (23) whose first input is connected to the non-inverting output of the sixth flip-flop (22), whose second input is connected to the non-inverting output of the first flip-flop (17), and whose output is connected to the reset inputs of all six flip-flops (17 to 22), comprising a second NAND-gate (24) whose first input is connected to the inverting output of the second flip-flop (18) and whose second input is connected to the inverting output of the third flip-flop (19), comprising a first AND-gate (25) whose first input is connected to the output of the second NAND-gate (24), whose second input is connected to the non-inverting output of the fourth flip-flop (20), and whose third input is connected to the inverting output of the first flip-flop (17), comprising a second AND-gate (26) whose first input is connected to the non-inverting output of the first flip-flop (17) and whose second input is connected to the inverting output of the fourth flip-flop (20), and comprising a NOR-gate (27) whose first input is connected to the output of the first AND-gate (25), whose second input is connected to the output of the second AND-gate (26) and whose output is connected to the output of the arrangement (b).

Revendications

1. Appareil de multiplexage pour des signaux numériques plésiochrones devant être imbriqués suivant le procédé de remplissage positif ou négatif et déjà adaptés dans le cas de canaux interconnectés dans un point de branchement, qui comporte des dispositifs adaptateurs (6) qui introduisent des impulsions de remplissage positives ou négatives dans chaque signal numérique plésiochrone et délivrent le signal numérique adapté ainsi qu'une information de remplissage, des dispositifs de désemplissage — dans le cas de canaux interconnectés dans un point de branchement — qui délivrent le signal numérique adapté ainsi que l'information de remplissage, un multiplexeur (11) qui imbrique les signaux numériques adaptés et les informations de remplissage devant être introduites dans une super-trame pour former le signal de multiplexage dans le temps, des dispositifs de surveillance (5) qui signalent la perte d'un ou de plusieurs signaux numériques, un dispositif (13) pour produire une information de remplissage synthétique qui déclenche, côté réception, un signal AIS (signal un permanent) côté sortie se trouvant dans la gamme de tolérances de la fréquence de cadence des signaux numériques, et un dispositif (16) pour produire un signal AIS côté entrée, caractérisé en ce qu'on prévoit un dispositif de commutation (10) qui est commandé par les dispositifs de surveillance (5) et qui, dans le cas de la perte d'au moins un signal numérique, introduit directement dans le multiplexeur (11), dans au moins un des canaux concernés, d'une part l'information de remplissage synthétique et d'autre part le signal AIS côté entrée.

2. Appareil de multiplexage suivant la revendication 1, caractérisé par le fait que le dispositif (13) pour produire une information de remplissage synthétique est dimensionné de manière que l'information de remplissage synthétique présente une répartition uniforme des états « 1 » dans la super-trame.

3. Appareil de multiplexage suivant l'une des revendications 1 ou 2, comportant une super-trame constituée par trente-trois trames de base pour l'information de remplissage, caractérisé par le fait qu'en tant que dispositif (13) pour produire une information de remplissage synthétique on prévoit un compteur pouvant être remis dans l'état initial, comportant une chaîne de six bascules (17 à 22), pour lesquelles la fréquence de la trame de base est appliquée à l'entrée de cadence de la première bascule (17), et pour lesquelles l'entrée non inverseuse de chaque bascule précédente est reliée à l'entrée de cadence de la bascule suivante respective, une première porte $\overline{ET}$ (23) dont la première entrée est reliée à la sortie non inverseuse de la sixième bascule (22), dont la seconde entrée est reliée à la sortie non inverseuse de la première bascule (17) et dont la sortie est reliée aux entrées de mise dans l'état de repos de l'ensemble des six bascules (17 à 22), une seconde porte $\overline{ET}$ (24) dont la première entrée est reliée à l'entrée inverseuse de la seconde bascule (18) et dont la seconde entrée est reliée à la sortie inverseuse de la troisième bascule (19), une première porte ET (25) dont la première entrée est reliée à la sortie de la seconde porte $\overline{ET}$ (24), dont la seconde entrée est reliée à la sortie non inverseuse de la quatrième bascule (20) et dont la troisième entrée est reliée à la sortie inverseuse de la première bascule (17), une seconde porte ET (26) dont la première entrée est reliée à la sortie non inverseuse de la première bascule (17) et dont la seconde entrée est reliée à la sortie inverseuse de la quatrième bascule (20), et une porte $\overline{OU}$ (27) dont la première entrée est reliée à la sortie de la première porte ET (25) dont la seconde entrée est reliée à la sortie de la seconde porte ET (26) et dont la sortie est reliée à la sortie du dispositif (b).

# FIG 1

# FIG 3

# FIG 2

# FIG 5

# FIG 4

| RT | A6 | A5 | A4 | A3 | A2 | A1 | A7 |
|---|---|---|---|---|---|---|---|
| 1 | 0 | 0 | 0 | 0 | 0 | 0 | 1 |
| 2 | 0 | 0 | 0 | 0 | 0 | 1 | 0 |
| 3 | 0 | 0 | 0 | 0 | 1 | 0 | 1 |
| 4 | 0 | 0 | 0 | 0 | 1 | 1 | 0 |
| 5 | 0 | 0 | 0 | 1 | 0 | 0 | 1 |
| 6 | 0 | 0 | 0 | 1 | 0 | 1 | 0 |
| 7 | 0 | 0 | 0 | 1 | 1 | 0 | 1 |
| 8 | 0 | 0 | 0 | 1 | 1 | 1 | 0 |
| 9 | 0 | 0 | 1 | 0 | 0 | 0 | 1 |
| 10 | 0 | 0 | 1 | 0 | 0 | 1 | 1 |
| 11 | 0 | 0 | 1 | 0 | 1 | 0 | 0 |
| 12 | 0 | 0 | 1 | 0 | 1 | 1 | 1 |
| 13 | 0 | 0 | 1 | 1 | 0 | 0 | 0 |
| 14 | 0 | 0 | 1 | 1 | 1 | 1 | 1 |
| 15 | 0 | 0 | 1 | 1 | 1 | 0 | 0 |
| 16 | 0 | 0 | 1 | 1 | 1 | 1 | 1 |
| 17 | 0 | 1 | 0 | 0 | 0 | 0 | 1 |
| 18 | 0 | 1 | 0 | 0 | 0 | 1 | 0 |
| 19 | 0 | 1 | 0 | 0 | 1 | 0 | 1 |
| 20 | 0 | 1 | 0 | 0 | 1 | 1 | 0 |
| 21 | 0 | 1 | 0 | 1 | 0 | 0 | 1 |
| 22 | 0 | 1 | 0 | 1 | 0 | 1 | 0 |
| 23 | 0 | 1 | 0 | 1 | 1 | 0 | 1 |
| 24 | 0 | 1 | 0 | 1 | 1 | 1 | 0 |
| 25 | 0 | 1 | 1 | 0 | 0 | 0 | 1 |
| 26 | 0 | 1 | 1 | 0 | 0 | 1 | 1 |
| 27 | 0 | 1 | 1 | 0 | 0 | 0 | 0 |
| 28 | 0 | 1 | 1 | 0 | 0 | 1 | 1 |
| 29 | 0 | 1 | 1 | 1 | 1 | 0 | 0 |
| 30 | 0 | 1 | 1 | 1 | 1 | 0 | 1 |
| 31 | 0 | 1 | 1 | 1 | 1 | 0 | 0 |
| 32 | 0 | 1 | 1 | 1 | 1 | 1 | 1 |
| 33 | 1 | 0 | 0 | 0 | 0 | 0 | 1 |